# EUROPEAN PATENT APPLICATION

(11) **EP 2 767 937 A1**
(43) Date of publication of application: **20.08.2014**
(21) Application number: 14154242.3
(22) Date of filing: 07.02.2014
(51) Int. Cl.: G06Q 10/06

(54) **Display of process-plan execution**

(30) Priority: 15.02.2013 US 201313768427
(71) Applicant: The Boeing Company, Chicago, IL 60606-2016 (US)
(72) Inventor: Sherer, Thomas, Chicago, IL 60606-2016 (US); Grose, David L., Chicago, IL 60606-2016 (US); Button, Scott D., Chicago, IL 60606-2016 (US)
(74) Representative: Shipp, Nicholas

(57) **Abstract**

A method is provided that includes receiving a plan model for a process including a plurality of tasks, and generating a layout including a network diagram (200) that expresses the plan model. The method also includes simulating execution of the plan model, and dynamically updating the network diagram (200) to reflect an actual task duration tracked for each task during the simulation. The network diagram (200) includes along a time-directed axis (202), a plurality of task nodes (604, 606) that express respective tasks, with each task node (604) being expressed as a first multi-dimensional shape having an outline with a dimension along the axis sized according to a task duration for a respective task. In the updated network diagram (200), then, each task node (1104, 1106) further includes a fill (816) in the same first multi-dimensional shape as the respective outline but with a dimension along the axis sized according to the actual task duration of the respective task.

## Description

### TECHNOLOGICAL FIELD

The present disclosure relates generally to process planning and, in particular, to the display of process-plan execution for stochastic processing planning models.

### BACKGROUND

Complex projects such as the planning and production of large commercial or military aircraft require the scheduling and coordination of a plurality of resources. The resources to be coordinated may include materials, component parts, personnel, machinery and factory floor space, in addition to other resources. Integration and coordination is particularly important in complex projects since higher-order effects and interactions can adversely affect the cost of the project, the time required for completion of the project, and the risk of failure to deliver the required content. In addition, other variables of importance such as the overall efficiency of the project need to be modeled and measured.

In a number of known methods, the planning process generally includes the processing of input data that defines task dependencies and estimated task durations. Task dependencies generally express relationships between various tasks, so that the various tasks may be properly ordered. For example, in the construction of large commercial aircraft, a material such as an aluminum sheet material must be procured before fuselage panels may be fabricated. The input data may be processed in accordance with a number of different techniques to arrange the various tasks into an ordered set. In some cases, a multiplicity of different paths may result from processing the input data, which may include multiple paths that may be identified as critical. The critical path may be the sequence of tasks throughout the project that determines its duration, and may be the path with the least amount of scheduling flexibility (float). Accordingly, it is the path along which no delay in the provision of a necessary resource may occur without delaying the entire project, and is thus of central importance in project execution. The manufacturing process may therefore be analyzed based upon relationships between the various individual tasks comprising the process, and upon a critical path for the process. The critical path may shift from a first task set to another task set as resource delays occur and/or task durations vary from their estimated values. Accordingly, the critical path is not fixed, and may change.

Although existing process planning methods are useful, they nevertheless exhibit drawbacks. The total-ordering of products produced during the course of a process may enable efficient execution of the process. Existing methods do not support determining total order, and the use of scheduling as the basis for order often causes significant out-of-sequence rework to manifest. Total order information may indicate that schedule constraints imposed by current methods should be overridden to achieve the greater consistency provided by imposing ordering constraints. The current methods of control using scheduling can over-constrain the process limiting completion of tasks. Further, current methods of managing large-scale product development may be more time consuming and at a greater cost than desired. Therefore it would be desirable to have a method and system that takes into account at least some of the issues discussed above, as well as other possible issues.

### BRIEF SUMMARY

Example implementations of the present disclosure are generally directed to a system, and corresponding method and computer-readable storage medium for the display of process-plan execution for stochastic processing planning models. Existing solutions demonstrate an inability to provide the necessary conditions to manage large-scale product development programs within the original cost and schedule requirements that were necessary for financial business case justification. Example implementations may provide the information that addresses a primary root cause of cost/schedule overruns, and may produce information to support a remedy. Example implementations may provide information supporting the ability to replicate the cause and effect of cost and schedule overruns caused by use of the existing solutions. Example implementations may further provide a dynamic layout representing the state of a plan during its execution, and may highlight and demonstrate the consequences of any out-of-sequence operations.

According to one aspect of example implementations, a method is provided that includes receiving a plan model for a process including a plurality of tasks, and generating a layout including a network diagram that expresses the plan model. The method also includes simulating execution of the plan model, and dynamically updating the network diagram to reflect an actual task duration tracked for each task during the simulation. The network diagram includes along a time-directed axis, a plurality of task nodes that express respective tasks, with each task node being expressed as a first multi-dimensional shape having an outline with a dimension along the axis sized according to a task duration for a respective task. In the updated network diagram, then, each task node further includes a fill in the same first multi-dimensional shape as the respective outline but with a dimension along the axis sized according to the actual task duration of the respective task.

In one example, each task node may be expressed as a rectangular cuboid having an outline with a length along the axis sized according to the task duration for the respective task. In this example, each task node may further include a fill in the same rectangular cuboid shape as the respective outline but with a length along the axis sized according to the actual task duration of the respective task, with the length of the fill originating coincident with the length of the outline.

In one example, the network diagram may further include buffer node(s) that express respective buffers for respective chain(s) in which the tasks are arranged. Each buffer node may be expressed as a second multi-dimensional shape having an outline with a dimension along the axis sized according to a size of a respective buffer. In this example, tracking the actual task duration may further include tracking buffer consumption of each buffer during the simulation, with the network diagram being dynamically updated to reflect the buffer consumption. In the updated network diagram, each buffer node may further include a fill in the same second multi-dimensional shape as the respective outline but with a dimension along the axis sized according to the buffer consumption of the respective buffer.

In a further example, each buffer node may be expressed as a sphere having an outline with a diameter along the axis sized according to the size of the respective buffer. In this further example, each buffer node may further include a fill in the same spherical shape as the respective outline but with a diameter along the axis sized according to the buffer consumption of the respective buffer, with the center of the fill originating coincident with the center of the outline.

In one example, execution of the plan model may be simulated in a data-driven configuration in which for at least some of the tasks that utilize or require one or more inputs, each task requires availability of all of its inputs before being initiated. In addition or in the alternative, in one example, execution of the plan model may be simulated in a schedule-driven configuration in which for at least some of the tasks that utilize or require one or more inputs, each task is initiable in accordance with a schedule even if before all of its inputs are available.

In the schedule-driven example, the task node's fill may include a first fill that expresses the actual task duration of a task in an instance in which the task is initiated after all of its inputs are available. In another instance in which a task is initiated before all of its inputs are available, the task node's fill may include a second fill that expresses the actual task duration of the task executed out of sequence before all of its inputs are available, and a third fill that expresses the actual task duration of the task reworked after all of its inputs become available.

In other aspects of example implementations, a plan executor and computer-readable storage medium are provided. The features, functions and advantages discussed herein may be achieved independently in various example implementations or may be combined in yet other example implementations further details of which may be seen with reference to the following description and drawings.

### BRIEF DESCRIPTION OF THE DRAWING(S)

Having thus described example implementations of the disclosure in general terms, reference will now be made to the accompanying drawings, which are not necessarily drawn to scale, and wherein:
FIG. 1 illustrates a process-planning system in accordance with an example implementation;
FIGS. 2 and 3 illustrate feed-forward networks in accordance with example implementations;
FIG. 4 illustrates one example of a total-ordering system in accordance with an example implementation;
FIG. 5 illustrates one example of a plan executor in accordance with an example implementation;
FIGS. 6, 8, 9 and 11-14 illustrate layouts according to example implementations; and
FIGS. 7 and 10 illustrate state diagrams according to example implementations.

### DETAILED DESCRIPTION

Some implementations of the present disclosure will now be described more fully hereinafter with reference to the accompanying drawings, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art. For example, unless otherwise indicated, reference something as being a first, second or the like should not be construed to imply a particular order. Also, something may be described as being above something else (unless otherwise indicated) may instead be below, and vice versa; and similarly, something described as being to the left of something else may instead be to the right, and vice versa. Like reference numerals refer to like elements throughout.

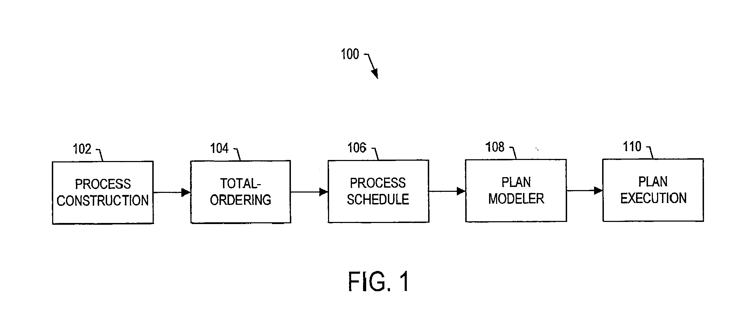

Referring now to FIG. 1, a process-planning system **100** is illustrated according to example implementations of the present disclosure. The system may include any of a number of different subsystems (each an individual system) for performing one or more functions or operations. As shown, for example, the system may include a process-construction system **102,** total-ordering system **104,** schedule modeler **106,** plan modeler **108** and/or plan executor **110.** The process-construction system may be generally configured to construct a process for production of a product. The total-ordering system may be generally configured to establish total-ordering in a process such as that constructed by the process-construction system (well-ordering at times being used interchangeably, but more specifically referring to total-ordered set in which every non-empty subset has a minimum element). The schedule modeler may be generally configured to construct a process schedule according to a total-ordered process such as that from the total-ordering system. The plan modeler, then, may be configured to construct a plan model based on the process and its schedule. And the plan executor may be generally configured to simulate execution of the plan model, and generate a dynamic layout representing the state of the plan during its execution, and may highlight and demonstrate the consequences of any out-of-sequence operations.

Although shown as part of the process-planning system **100,** one or more of the process-construction system **102,** total-ordering system **104,** schedule modeler **106,** plan modeler **108** and/or plan executor **110** may instead be separate from but in communication with the process-planning system. It should also be understood that one or more of the subsystems may function or operate as a separate system without regard to others of the subsystems. And further, it should be understood that the process-planning system may include one or more additional or alternative subsystems than those shown in FIG. 1.

As indicated above, the process-construction system **102** may be configured to construct a process for production of a product. A product, including physical products (e.g., objects) and non-physical products (e.g., information), may be described in terms of a hierarchical breakdown (hereinafter referred to as a "hierarchy") of the product's components. A "process" may be adapted to describe production of the product by defining tasks and precedences associated with the creation of each component. For example, the precedences may indicate that a particular task should be completed before another task is performed. In various examples, a task may refer to an activity or set of activities performed during creation of a component.

A complex process may include one or more sub-processes each of which may at times be considered a separate process without regard to the complex process or others of the sub-processes. In one example, the process constructed by the process-construction system **102** may be expressible as a network. The process-construction system may construct a suitable network in any of a number of different manners. In one example, the process-construction system may construct the network in accordance with technologies described in the aforementioned '768 patent. In one example, the process, and thus its network expression, may be adapted to maintain a feed-forward constraint such that no cycles or loops are contained within the process. The process and its network expression may also be scalable such that it may be combined with other processes to generate a larger process.

As used herein, a "product" may refer to something input into or produced by a process in the network. An illustrative process may be a commercial aircraft development process. In one example, a product of the commercial aircraft development process may include an aircraft or a part of the aircraft (e.g., fuselage section, wing, landing gear, engine, etc.). In another example, the product may include a type certificate or other relevant document related to legal use of the aircraft. In yet another example, the product may include a design specification or other dataset related to the design and/or construction of the aircraft. Some other examples of products may include a wing center section, a control column and wheel, an overhead stowage bin, a layout of passenger arrangement, front spar interface loads, pitching moment curves and the like.

The product may be either an "internal product" or an "external product." An internal product may be producible by one or more tasks in the network (the respective one or more tasks in various instances being considered a sub-process). In one example, an internal product may be considered a segment, which may be an internal product that is not a component of another internal product, but is instead intended to be broken into more detailed components. An internal product may receive as input an external product and/or an internal product. Some examples of internal products in the commercial aircraft development process may include avionics, propulsion systems, engine-specific fuel consumption curves and the like. Each internal product may include one or more "internal inputs," which may be utilized or needed to produce the internal product.

The internal inputs may include "internal components" and "component inputs." The internal components may refer to a subset of non-external inputs that is not part of the same segment as the internal product. The component inputs may refer to a subset of non-external inputs that is part of the same segment as the internal product. Each component input may include multiple "component products," the aggregate of which form the component input. An illustrative internal product may be a subassembly. For the subassembly, an example component input may be parts of the subassembly, and an example internal component may be a tool that assembles the parts to produce the subassembly. In this case, the parts assemble to form the subassembly. As such, the parts are considered in the same segment as the subassembly. In contrast, the tool that assembles the parts is not included within the subassembly. As such, the tool is considered as not part of the same segment as the subassembly.

The external product may be produced outside of a process in the network. In contrast to the internal product, input to the external product may not be represented in the context of the process or its network expression. Some examples of external products in the commercial aircraft development process may include regulatory requirements, customer requirements, company ground rules, existing facilities and the like. The external product may include multiple components, the aggregate of which forms the external product. Each such component forming the external product may be referred to herein as an "external component." The internal products, external products, internal components, component inputs and/or external components may form the set of inputs into a process adapted to produce any given internal product.

Each internal product may be a component. Each component may include multiple nested components, and may further include additional nested components at deeper levels of the hierarchy. In the commercial aircraft development process, some examples of segment components may include technology assessment, exploratory design, conceptual design, preliminary design, production system, infrastructure, detail manufacturing plans, vehicle product, product validation and the like. The example component "infrastructure" may include a nested component "production facilities," which further includes a nested component "major assemblies." The component "major assemblies" may include a nested component "wing center section," which further includes a nested component "upper panel." Additional nested components may continue from the component "upper panel."

As used herein, an "input" may refer to a product, such as an internal or external product, that may be utilized or required by the task to produce another product. That is, a statement that a first product is input to a second product may refer to the utilization or requirement of the first product by the task to produce the second product. For example, an internal product may be a design specification of an airplane wing. An external product may be specifications of fasteners that are utilized or required in the production of the detailed design. In this case, since the design specification of the airplane wing utilizes or requires the specifications of fasteners, the specifications of fasteners may also be referred to as an external input to the design specification of the airplane wing. According to some example implementations, an internal product can receive an input, but an external product cannot receive an input. Example technologies for selecting the inputs are described in the above-referenced and incorporated '768 patent.

The process constructed by the process-construction system **102** may be expressed by a feed-forward network including one or more external products and two or more segments. In one example, as described in greater detail in the '768 patent, the process construction may include selection of one or more segments as final products of the process. At the segment level, the feed-forward network may be initialized by selection of other segments required for the production of a final segment as its input. Then, any input which does not violate the order of the feed-forward network may be specified, further augmenting the feed-forward network. If a segment requires only external products as inputs to produce its product, it may be an initial product. Establishment of a feed-forward network that connects initial products to final products and contains all segments of the network may be necessary to complete this, segment-level phase of the process construction. In various examples, new external products and segments that establish proper connection to the feed-forward network may be added. This may imply that all segments have at least one specified internal or external input.

As indicated above, segments may be internal products of the process intended to be broken into more detailed components. Similarly, external products may be broken into more detailed external products. Internal and external products may form a hierarchy rooted at the process. When creating a new, lower-level of the feed-forward network, this hierarchy may be uniformly expanded by adding components and external products that are connected into the network at this new level. Two or more components may be defined for each segment to create the next level of the network. Similarly, each of the external products required for the process may have at least two detailed external products composing it, which may be defined.

The selection of inputs to components may be more restrictive than the selection of inputs into segments. A sub-network, which is also feed-forward and connects only components of a single segment, may be established for each segment such as by specifying the component inputs of each component. Further, components of the inputs of the containing segment may be the only possible internal inputs to a component. The external inputs to a component may be similarly constrained. The addition of internal and external inputs to a component may integrate that component and the component sub-network into the feed-forward network at the component's level. At least one of a segment's components may input at least one of the components of each of that segment's internal inputs, and similarly, for specifying external inputs for the component from the segment's external inputs.

The process hierarchy may be further broken down by adding levels of components and external products. The component inputs of each containing component may constrain the internal inputs of the contained component in the same way the internal inputs of a segment constrain the internal inputs of its components. Otherwise, levels of components and their resulting sub-networks may be specified in the same way as the first level of components of segments.

Two processes with the same level of hierarchical breakdown constructed as above may be combined if products of one of the processes can be mapped to the external inputs of the other. Similarly, two feed-forward networks at the segment level are such that the external input requirements of one do not precede the external input requirements into the other, the networks may be combined into a single process.

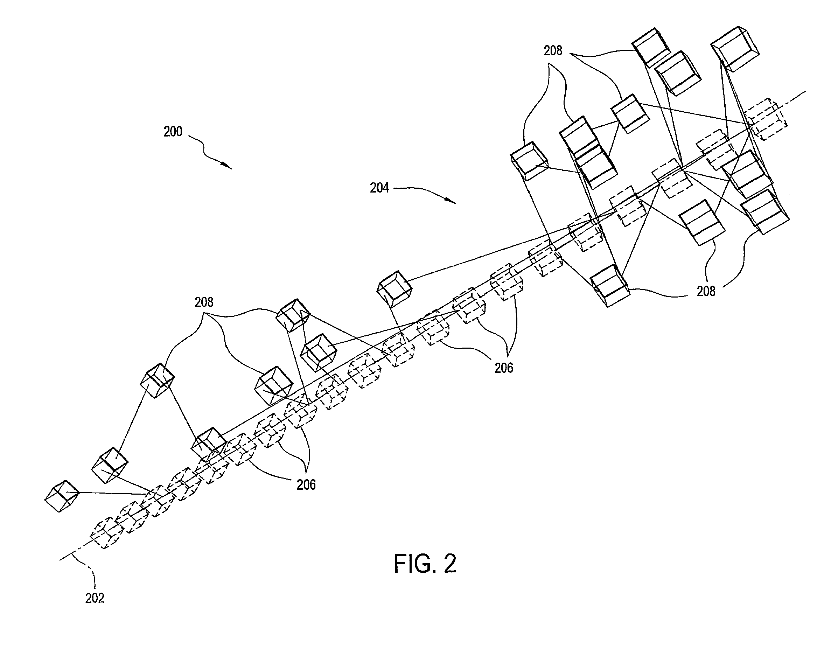

FIG. 2 illustrates an example layout of a suitable network diagram **200** that may express a process constructed by the process-construction system **102** of one example implementation. Standard network characteristics may be used in the layout to add meaning to displayed data. As shown, for example, the network includes a central time-directed axis **202,** and a plurality of network nodes **204** that express respective products of the process. The nodes may be connected by edges reflecting precedence relationships between the nodes, and correspondingly between the respective products of the process. Each of the network nodes may include an associated slack parameter that may be used to determine a distance of the network node from central time-directed axis. In this regard, nodes **206** having zero slack values may be selected to lie on or near the axis, and other nodes **208** having higher slack values may be positioned about the axis. In one example, nodes **206** may be strictly-ordered nodes without flexibility in their order (linearly constrained), and the axis may be a linear, strictly-ordered axis. In this example, the other nodes **208** may be parallel nodes that have some flexibility in their order. As explained in greater detail below, nodes **206** may form a first or alpha chain, and other nodes **208** may form one or more second or second alpha chains.

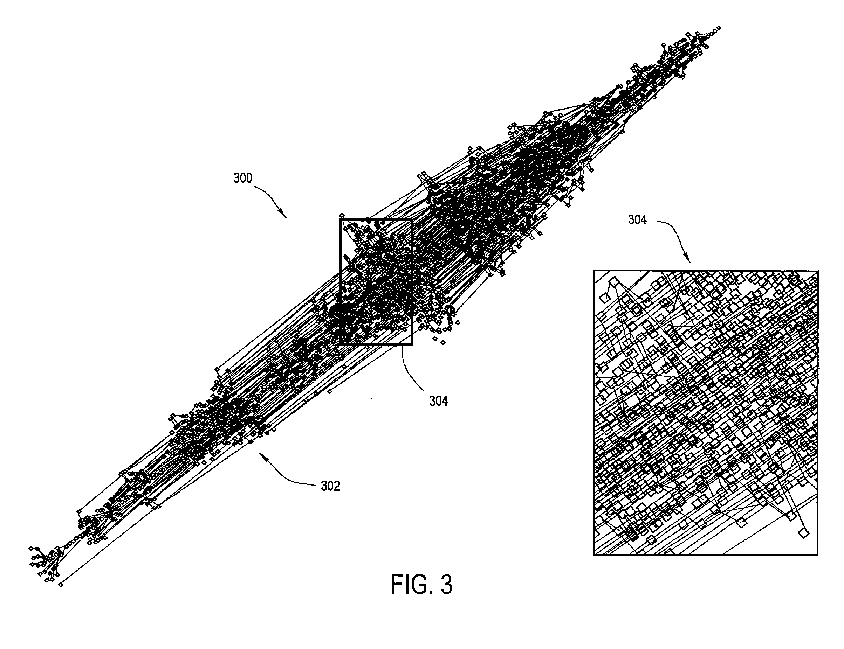

FIG. 3 illustrates a suitable network diagram **300** similar to diagram **200,** but that may express a more complex process. As shown, similar to the diagram of FIG. 2, the network diagram of FIG. 3 a plurality of network nodes **302** that may be connected by edges reflecting precedence relationships between the nodes, a portion of which are further highlighted in inset **304.** For more information regarding the layouts of FIGS. 2 and 3, as well as other suitable layouts according to example implementations, see U.S. Patent No. 7,873,920, entitled: *Methods and Systems for Displaying Network Information,* issued Jan. 18, 2011,. For other example layouts of suitable network diagrams, see U.S. Patent Application Publication No. 2012/0050287, entitled: *Three-Dimensional Display of Specifications in a Scalable Feed-Forward Network,* published Mar. 1, 2012.

In a network diagram such as the network diagrams **200, 300** of FIGS. 2 and 3, the nodes **204, 302** may represent the tasks to produce the internal products. The edges connecting nodes, then, may represent the internal products and reflect the precedence relationships between tasks. For example, an internal product that is utilized or required for production of another internal product may be represented by an edge connecting nodes representing the tasks to produce the respective internal product and other internal product. In this example, the task to produce the internal product may be considered a predecessor, and the task to produce the other internal product may be considered a successor. In this manner, the tasks (nodes) to produce internal products of the process expressed by the network may be properly ordered according to the internal products (edges) connecting them.

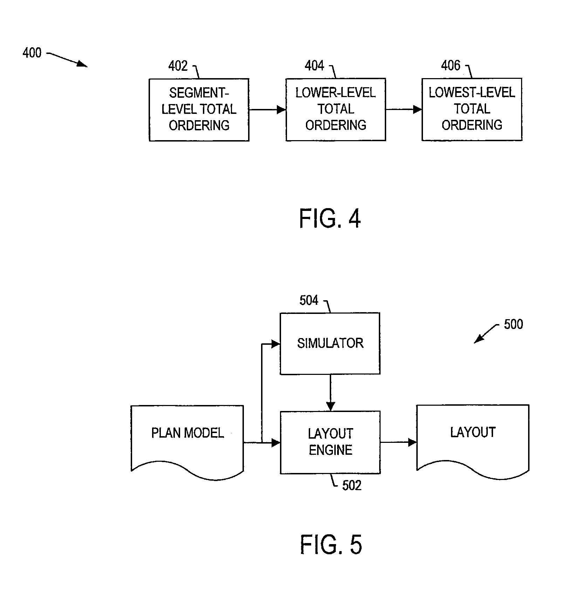

In one example, the total-ordering of internal products may enable efficient execution of the process. In this regard, ordering constraints such as total ordering may enable differentiation of the degree of impact that individual internal products may have on the process execution performance and resources. Adherence to integration constraints may enable efficient execution of the process. FIG. 4 illustrates a total-ordering system **400** that in one example may correspond to the total-ordering system **104** of FIG. 1. As shown, the total-ordering system **400** may be generally configured to establish total-ordering in a process such as that constructed by the process-construction system. As shown, the total-ordering system may include a segment-level total-ordering module **402,** one or more lower-level total-ordering modules **404** and a lowest-level total-ordering module **406.** In various examples, the total-ordering system may only include the segment-level total-ordering module, or may only include the segment-level total-ordering module and lower level total-ordering module. Or for greater detail, the total-ordering system may include the segment-level total-ordering module, one or more lower level total-ordering modules and the lowest-level total-ordering module.

The segment-level total-ordering module **402** may be configured to establish total-ordering at the segment level in a hierarchical feed-forward process, such as that constructed by the process-construction system **102.** The segment-level total-ordering module may also be configured to rebalance the level of detail during establishment of a network model structure to achieve consistency in content. The lower-level total-ordering module **404** may be configured to determine if total-ordering has been satisfied through decomposition of a process into one or more lower-levels, and may also rebalance the level of detail during decomposition. Similarly, the lowest-level total-ordering module **406** may be configured to confirm total-order of the process through its lowest level. In various examples, the lowest-level total-ordering module may also be configured to adjust content of the lowest-level components to satisfy total-order. In various examples, the total-ordering system **400** may produce a total-ordered process that may be expressed as a scalable, hierarchical feed-forward network with consistency in the detail content present in each hierarchical level. For more information regarding a suitable total-ordering system including segment-level, lower-level and lowest level total-ordering modules, which in one example may correspond to the total-ordering system **400** and respective ones of the segment-level, lower-level and lowest level total-ordering modules **402, 404, 406** of FIG. 4, see U.S. Patent Application No. 13/758,409, entitled: *Total-Ordering in Process Planning,* filed on February 4, 2013.

A process such as that constructed by the process-construction system **102,** and/or total-ordered by the total-ordering system **104,** may be described by process-related information, and may be expressed by a suitable total-ordered network. The process-related information may describe the internal products, external products, internal components, component inputs and/or external components of the process. The process-related information may describe the tasks to produce the internal product, and precedence relationships between tasks (predecessors, successors). Even further, the process-related information may include task durations for the respective tasks to produce internal products of the process. The task duration may be represented in any of a number of different manners, such as by a single estimated value, some combination of multiple estimated values or a statistical quantity. In one example, task duration may be represented by a probability distribution.

The tasks to produce internal products of the process may be arranged in one or more paths or chains of logically-sequenced tasks each of which may be scheduled during production of the process schedule (generally referred to herein as a "chain"). As suggested above with respect to FIGS. 2 and 3, the chain including strictly-ordered tasks may be considered the first or alpha chain, and any other chains may be considered second or second alpha chains. In one example, each chain may further include a buffer of a duration that may account for uncertainty in the task durations of the chain's tasks. For the alpha chain, the buffer may at times be referred to as the first, project or alpha buffer, and for each second alpha chain, the buffer may a times be referred to as the second or second alpha buffer.

The process of example implementations may be configured as data driven (or data based) in that execution of its tasks may depend on the existence or availability (generally "available") of their respective inputs. As indicated above, the task to produce an internal product may utilize or require one or more inputs, such as one or more internal products and/or external products. These inputs may be available at the same or different times, and temporally may include at least a last input. In one example, the tasks of a data-driven process require all of their inputs including the last input before they may be initiated, and must therefore be performed serially.

Briefly now returning to FIG. 1, the network that expresses a process such as that constructed by the process-construction system **102,** and/or total-ordered by the total-ordering system **104,** may describe a logical sequence of tasks to produce internal products of the process. The schedule modeler **106** of the process-planning system **100,** then, may be generally configured to receive process-related information for a total-ordered process, and from the information, construct a process schedule for execution of at least some of the tasks of the process. For more information regarding a suitable schedule modeler and method according to which a process schedule may be constructed, see U.S. Patent Application No. 13/758,353, entitled: *Alpha-Chain Constraints for Process Planning,* filed on February 4, 2013.

In one example, the schedule modeler **106** may be configured to schedule tasks based on their input dependencies, and may not require discrete dates or discrete task durations. As explained above, the tasks to produce internal products of the process may be arranged in chains including an alpha chain and perhaps one or more second alpha chains, each of which may include a respective project or second buffer. In one example, for each chain, the schedule modeler may be configured to calculate an average duration for the tasks of the chain, and in one example, a buffer size (duration) for the respective chain. The schedule modeler may be configured to calculate the average duration and buffer in any of a number of different manners. One example of a suitable manner is disclosed in the aforementioned '353 application, again, entitled: *Alpha-Chain Constraints for Process Planning.*

The schedule modeler **106** may calculate the average task duration and size of the project buffer for the alpha chain, and may similarly calculate the average task duration and size of the second buffer for each of one or more second alpha chains. The schedule modeler may further be configured to construct the process schedule based on the tasks, for the alpha and any second alpha chains, and based on the average task durations and buffer sizes for the respective chains. In one example, the schedule modeler may sequence the tasks and buffer for each chain according to their average duration and buffer size, and with the buffer being sequenced (temporally) after the last task of the chain.

As indicated above, the process-planning system **100** may further include a plan modeler **108** configured to construct a plan model based on a process and its schedule. In one example, the total-ordering system **104** or schedule modeler **106** may communicate process-related information (e.g., network) for a total-ordered process to the plan modeler, and the schedule modeler may communicate the process schedule to the plan modeler. The plan modeler then may compile the process-related information, plan schedule and any other appropriate information into a plan model. In one example, this other appropriate information may include resource-related information that describes resources and policy constraints on the process. Resource-related information may include, for example, manpower requirements and manpower availability, factory floor space availability, tooling requirements and/or any other resources required to execute the process. In various examples, the plan modeler may assign resources to execute the process, and may identify any potential conflicts or other issues that may arise during execution of the process. For example, the plan modeler may determine if a task requires a quantity of a particular resource greater than an amount that is currently available. In another example, the plan modeler may forecast a completion date for the process that exceeds its predetermined end date (e.g., milestone). These conflicts/issues may be communicated to appropriate personnel to facilitate their making decisions and taking various remedial actions.

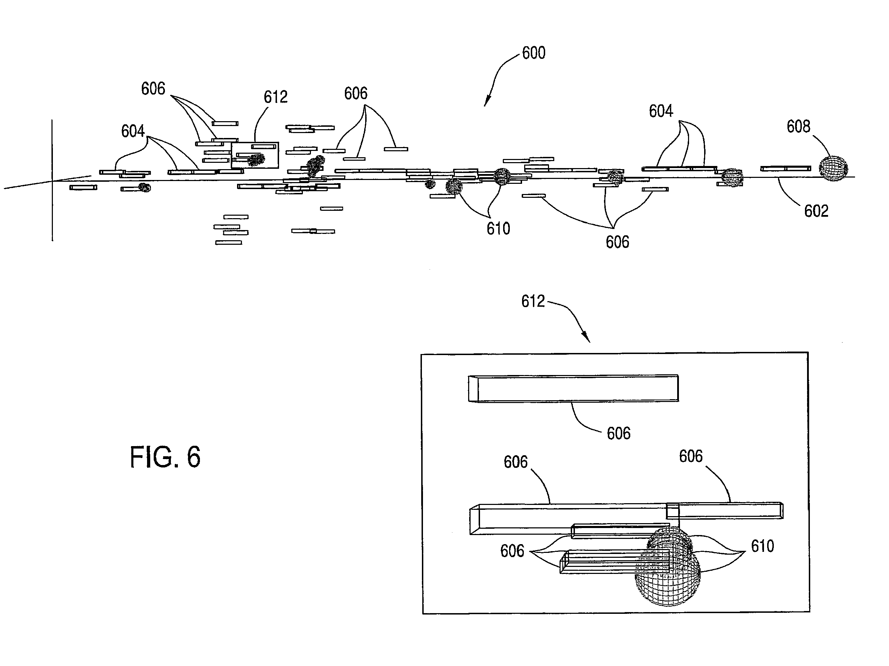

FIG. 5 illustrates a plan executor **500** that in one example may correspond to the plan executor **110** of FIG. 1. The plan executor **500** may be generally configured to simulate execution of the plan model, and generate a dynamic layout representing the state of the plan during its execution. As shown, the plan executor may include a layout engine **502** and simulator **504** configured to receive a plan model such as that constructed by a plan modeler (e.g., plan modeler **108).** The layout engine may be configured to generate a layout including a suitable network diagram that may express the plan model. One example of a suitable network diagram is shown in FIG. 6. As shown, for example, the network diagram **600** includes a central time-directed axis **602.** Along the axis, the network diagram includes a plurality of network nodes including task nodes **604, 606** that express respective tasks to produce the internal products of the process. The tasks may be arranged in one or more chains, and for each chain, the network nodes may include a buffer node **608, 610** that expresses the chain's buffer. Although not shown for increased clarity, the network nodes may be connected by edges reflecting precedence relationships between the network nodes, and correspondingly between the respective tasks of the process.

Each of the task nodes **604, 606** may include an associated slack parameter that may be used to determine a distance of the respective node from central time-directed axis **602.** In this regard, task nodes **604** having zero slack values may be selected to lie on or near the axis, and may form the alpha chain. After the last task node in the alpha chain, the network diagram **600** may include buffer node **608** representing the project buffer. Other nodes **606** having higher slack values may be positioned about the axis, and may form one or more second alpha chains. And after each of these second alpha chains, the network diagram may include a respective buffer node **610** representing a second buffer.

In one example, the network nodes may be expressed as multi-dimensional shapes, which may have outlines with a dimension long the axis **602** sized according to their average duration or buffer size. In one example, shown more particularly in the inset **612** to FIG. 6, the task nodes **604, 606** may be expressed as first multi-dimensional shapes such as rectangles (two-dimensional - 2D) or rectangular cuboids (three-dimensional - 3D). The buffer nodes **608, 610,** in turn, may be expressed as different, second multi-dimensional shapes such as circles (2D) or spheres (3D). In one example, the rectangle or rectangular cuboid expressing a task node may be outlined with a length along the axis sized according to the respective task's average duration. Similarly, the circle or sphere expressing a buffer node may be outlined with a diameter sized according to the respective buffer's size. And as further shown, the multi-dimensional shapes may be initially outlined in a particular color and be without a fill, which may express the plan model prior to execution.

The simulator **504** may be configured to simulate execution of the plan model, which the simulator may perform with the plan model in its data-driven configuration. The simulation may be carried out in a number of different manners, such as according to a Monte-Carlo analysis. In one example, the simulator may be configured to forecast or otherwise select task durations for respective tasks from their respective probability distributions, such as according to a method for randomly or pseudo-randomly selecting a value from a distribution (e.g., Monte Carlo). The simulator may then run through each task for each of a plurality of time steps and evaluate the state of the task through its life cycle in the plan model.

Each task may progress through a number of states beginning in a "waiting" state in which the simulator **504** may initiate each task. Other states in which a task may be placed may include "waiting-resource," "started," "finished" or the like. During the simulation, the state of a task may depend on a number of variables that the simulator may track, such as on an instantaneous and/or cumulative basis. These variables may include, for example, the availability of its inputs from predecessor tasks, the availability and/or usage of resources required to execute the task or the like. In one example, simulator may run through the tasks of the plan model until they all reach the end of their life cycle, which may be the finished state.

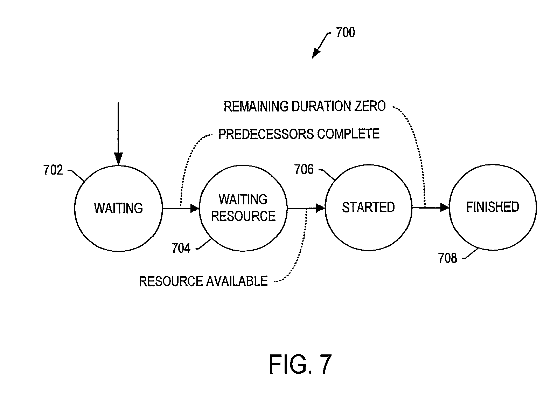

FIG. 7 illustrates a state diagram **700** of the life cycle of a task for the data-driven case. As shown, the life cycle of a data-driven task may start in the waiting state **702,** and move to the waiting-resource state **704** when the tasks to produce its inputs have all reached the finished state. This may indicate that all of the task's inputs are available. When the resources required to execute the task become available, the task may move from the waiting-resource state to the started state **706;** and at this time, the start time may be recorded. In various instances, the resources may become available before the task's inputs are available, and in these instances, the simulation may in one example immediately move the task from the waiting state through the waiting-resource state to the started state. Once in the started state, the task duration may be decremented for each subsequent time step until it reaches zero, at which point the task may be complete and move to the finished state **708.**

As the simulator **504** simulates simulate execution of the plan model, the simulator may track the actual task duration of each task in the started state, beginning with the recorded start time and concluding when the task moves to the finished state. Similarly, the simulator may track buffer consumption for each chain of tasks, which may include the sum of any actual task durations over respective average task durations in the chain. The simulator may communicate the actual task durations and buffer consumption to the layout engine **502,** which may dynamically update the network diagram expressing the plan model to reflect the information. In various examples, may occur at one or more times during the simulation to reflect execution of the plan model and the progression of tasks and buffer consumption during the execution.

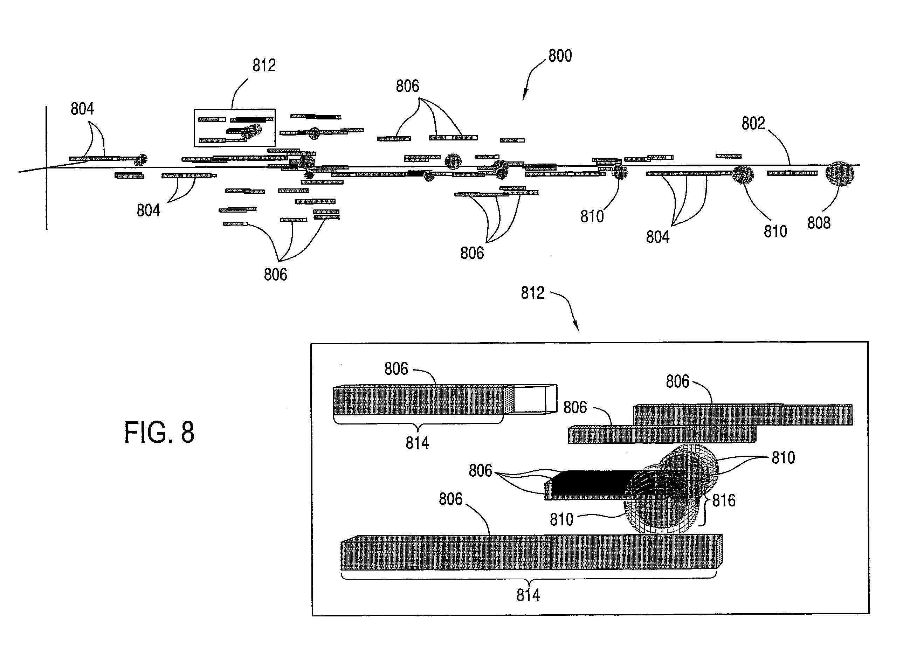

One example of a suitable network diagram after the simulator **504** has simulated execution of the plan model is shown in FIG. 8. As shown, for example, the network diagram **800** includes a central time-directed axis **802** similar to the axis **602** of FIG. 6 (although FIGS. 6 and 8 may not depict the same network). Along the axis, the network diagram also includes task nodes **804, 806** and buffer nodes **808, 810** similar to respective task nodes **604, 606** and buffer nodes **608, 610** of FIG. 6. In one example, the network diagram **800** of FIG. 8 may differ from the network diagram **600** of FIG. 6 in color and/or fill. As explained above, the multi-dimensional shapes expressing the network nodes in FIG. 6 may be initially outlined in a particular color and be without a fill, which may express the plan model prior to execution. In FIG. 8, on the other hand, the network nodes may be outlined in other colors and/or have fills (solid or patterned) that may express actual task duration and buffer consumption during or after execution of the plan model.

In one example, the actual task duration and buffer consumption may be expressed as a fill in the same first or second multi-dimensional shape as the respective outline but with a dimension along the axis **802** sized according to the actual task duration or buffer consumption. In one example, shown more particularly in the inset **812** to FIG. 8, each task node **804, 806** may be expressed as a first multi-dimensional shape (e.g., rectangular cuboid) outlined with a length along the axis sized according to the respective task's average duration. The task node may further include a fill **814** in the same first multi-dimensional shape as the outline but with a length along the axis sized according to the respective task's actual duration. The fill's length may originate coincident with that of the shape's outline and extend along the axis. In instances in which the actual task duration is less than or equal to the average duration, the fill may be contained within the outline of the first multi-dimensional shape. In other instances in which the actual task duration exceeds the average duration, the fill may extend past the outline of the first multi-dimensional shape along the axis.

As also shown in FIG. 8, each buffer node **808, 810** may be expressed as a second multi-dimensional shape (e.g., sphere) outlined with a diameter sized according to the respective buffer's size. The buffer may further include a fill **816** in the same second multi-dimensional shape as the outline but with a diameter sized according to the respective buffer's consumption. The fill's center may be coincident with the shape's center. In instances in which the buffer consumption is less than or equal to the buffer size, the fill may be contained within the outline of the second multi-dimensional shape. In other instances in which the buffer consumption exceeds the average duration, the fill may change from one color to another, and/or the outline may change from one color to another.

In various examples, the fill **816** of a buffer node **808, 810** may initially be a first color (e.g., blue) and transition from the first color to a second color (e.g., red) as the diameter increases with buffer consumption, with the fill fully reaching the second color when the buffer consumption equals or exceeds the buffer size. At this point, in one example, the outline may change from its initial color (e.g., gray) to another color (e.g., yellow). In various examples, the fill color of a buffer node may even change when the task's of its chain reach the finished state. In this regard, the fill color may change to one color (e.g., light blue) to express completed buffer consumption less than or equal to its size, or to another color (e.g., light red) to express completed buffer consumption greater than its size.

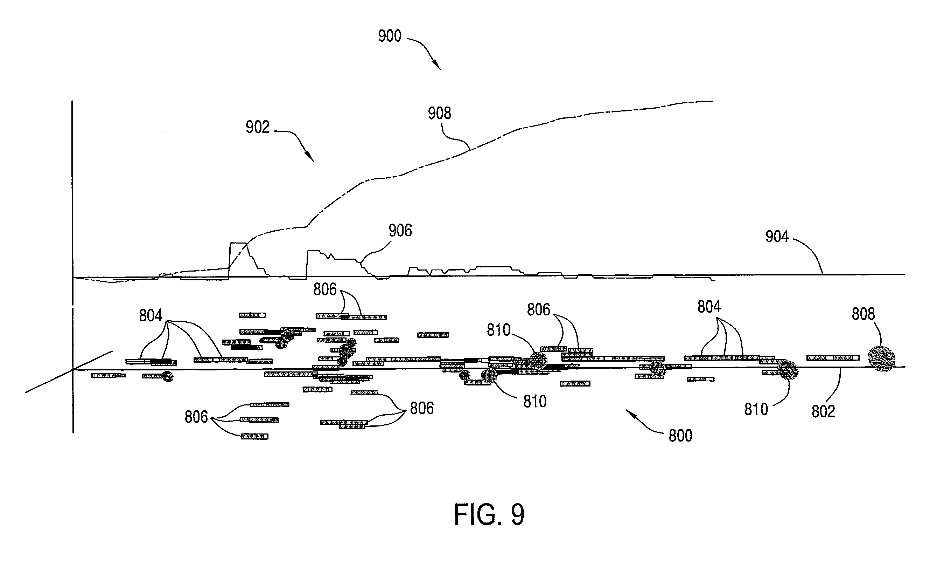

As mentioned above, as the simulator **504** simulates simulate execution of the plan model, the simulator may track a number of variables such as on an instantaneous and/or cumulative basis. In one example, the simulator may further communicate one or more of these tracked variables to the layout engine **502.** The layout engine may generate and dynamically update a layout that reflects the respective tracked variables, as well as the network diagram. One example of a suitable layout after the simulator has simulated execution of the plan model is shown in FIG. 9. As shown, for example, the layout 900 includes a network diagram **800** similar to that shown in FIG. 8, but additionally includes a line chart **902.** The line chart may include a central time-directed axis **904** that may be coincident or spaced from the axis **802** of the network diagram. Along the axis, the line chart also includes one or more traces that express respective tracked variables. As shown, for example, the line chart may include one trace **906** that expresses instantaneous resource usage, and/or another trace **908** that expresses cumulative resource usage.

In various examples, in addition to or in lieu of simulation of the plan model in its data-driven configuration, it may be desirable to simulate the plan model in a corresponding schedule-driven configuration. In the schedule-driven configuration, the execution of tasks may depend on discrete schedule estimates, and in various examples, may be initiated in accordance with their schedule estimates even if before all of their inputs are available. In these examples, the simulator may be configured to calculate scheduled start times for the tasks of the process. In this regard, the simulator may be configured to simulate the process similar to above for a plurality of instances, and for each instance, record the start time of each task. The simulator may then average the recorded start time of each task over the plurality of instances to calculate an average start time of each task, which in one example, may then be used for the scheduled start time for the task in the schedule-driven case.

In one example, the layout engine **502** may generate a network diagram for the schedule-driven case similar to that for the data-driven case, at least before the simulator **504** simulates execution of the plan model (see, e.g., FIG. 6). The simulator may be configured to simulate execution of the plan model in its schedule-driven configuration in a manner similar to that for the model in its data-driven configuration. In one example, the simulator may be configured to forecast or otherwise select task durations for respective tasks from their respective probability distributions, such as according to a method for randomly or pseudo-randomly selecting a value from a distribution (e.g., Monte Carlo). The simulator may then run through each task for each of a plurality of time steps and evaluate the state of the task through its life cycle in the plan model.

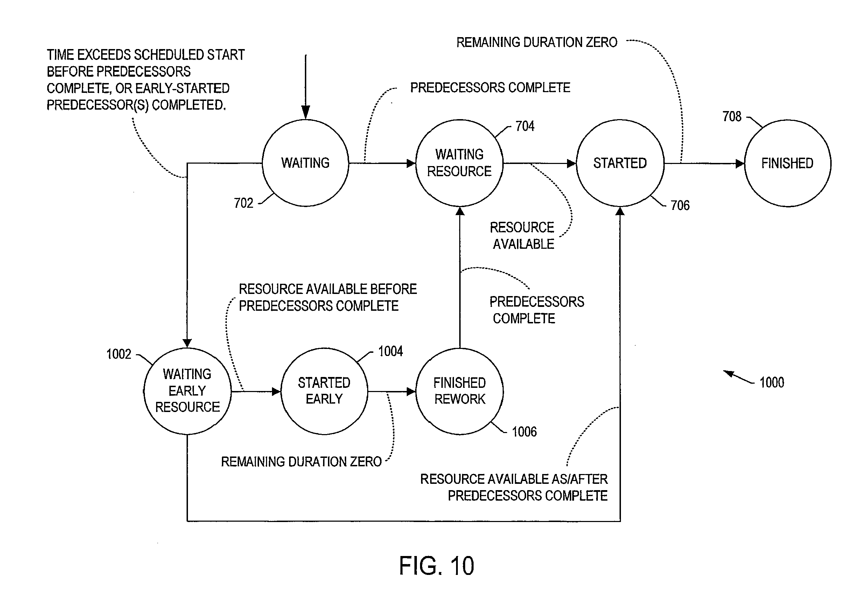

FIG. 10 illustrates a state diagram **1000** of the life cycle of a task for the schedule-driven case in which the life cycle of a task may be similar to that in the data-driven case, but may include additional states. These additional states may include "waiting-early-resource" **1002,** "started-early" **1004,** "finished-rework" **1006** or the like to account for other possibilities that may arise in the schedule-driven case. In this regard, the schedule-driven case may account for the possibility that while in the waiting state **702,** the simulation time passes the scheduled start time of the task before all of the task's inputs are available, or at least one predecessor task started early (out of sequence) finishes. In these instances, the task may take a different path and move from the waiting state to the waiting-early-resource state, instead of the waiting-resource state **704.** The task may then move from the waiting-early-resource state to the started-early state if the resources required to execute the task become available before all of its inputs become available; or otherwise, the task may move to the started state **706** if the required resources become available as or after all of its inputs become available. In either instance, the start time may be recorded for the task.

In the started state **706,** the task may go through its task duration and then move to the finished state **708,** similar to before in the data-driven case. In the started-early state **1004,** the task may similarly go through its task duration. That is, once in the started-early state, the task duration may be decremented for each subsequent time step until it reaches zero. At this point, the task may move to the finished-rework state **1006.** The task may then move from the finished-rework state to the waiting-resource state **704** when all of its inputs become available. And from the waiting-resource state, the task may complete its life cycle similar to in the data-driven case.

Similar to the data-driven case, the simulator **504** may track and communicate actual task durations and buffer consumption to the layout engine **502,** which may dynamically update the network diagram expressing the plan model to reflect the information. In various examples, may occur at one or more times during the simulation to reflect execution of the plan model and the progression of tasks and buffer consumption during the execution.

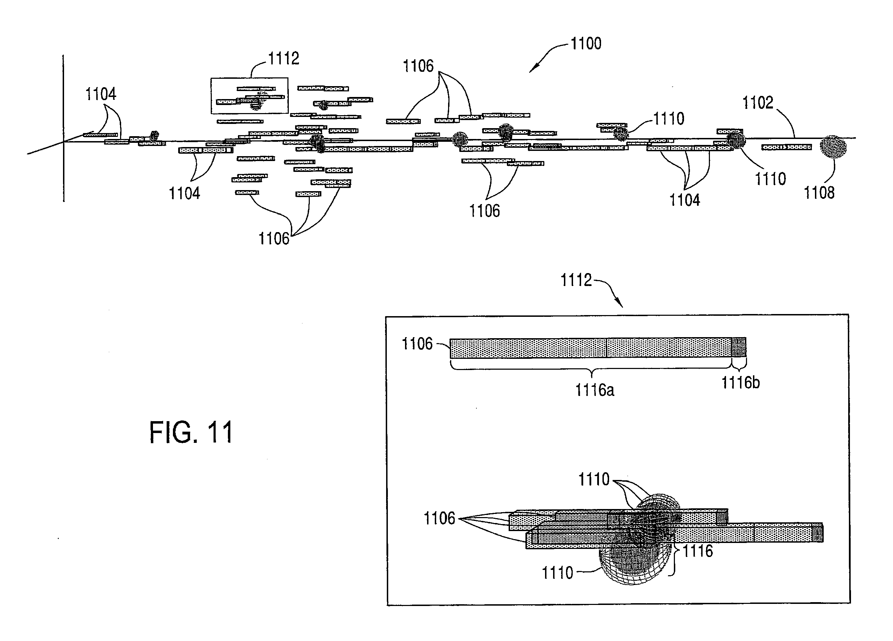

FIG. 11 illustrates one example of a suitable network diagram after the simulator **504** has simulated execution of the plan model similar to FIG. 8, but for the schedule-driven case. As shown, for example, the network diagram **1100** includes a central time-directed axis **1102** similar to the axis **802** of FIG. 8 (although FIGS. 8 and 11 may not depict the same network). Along the axis, the network diagram also includes task nodes **1104, 1106** and buffer nodes **1108, 1110** similar to respective task nodes **804, 806** and buffer nodes **808, 810** of FIG. 8. Also similar to FIG. 8, in FIG. 11, the network nodes may be outlined in other colors and/or have fills (solid or patterned) that may express task duration and buffer consumption during or after execution of the plan model.

In further similarity to FIG. 8, shown more particularly in the inset **1112** to FIG. 11, each task node **1104, 1106** and buffer node **1108, 1110** may be expressed as an outlined first multi-dimensional shape (e.g., rectangular cuboid) or second multi-dimensional shape (e.g., sphere). Similar to nodes in the data-driven case, the nodes in the schedule-driven case may include respective fills **1114, 1116** shaped similar to the outlines, but sized to reflect the respective task's actual duration or buffer consumption.

Task nodes in the schedule-driven case, however, may include additional fills (solid or patterned) to express the additional states in that case. For example, the task node **1104, 1106** may include a first fill (e.g., light blue) that expresses the task's actual duration in instances in which the task is initiated after all of its inputs are available. The task node may include other fills, however, in instances in which the simulation time passes the scheduled start time of the task before all of the task's inputs are available, or at least one predecessor task started early (out of sequence) finishes. In these instances, the task node may include a second fill **1116a** (e.g., red) that expresses the task's actual duration executed out of sequence (started early) before all of its inputs are available, and a third fill **1116b** (e.g., dark blue) that expresses the task's actual duration for rework after all of the task's inputs become available.

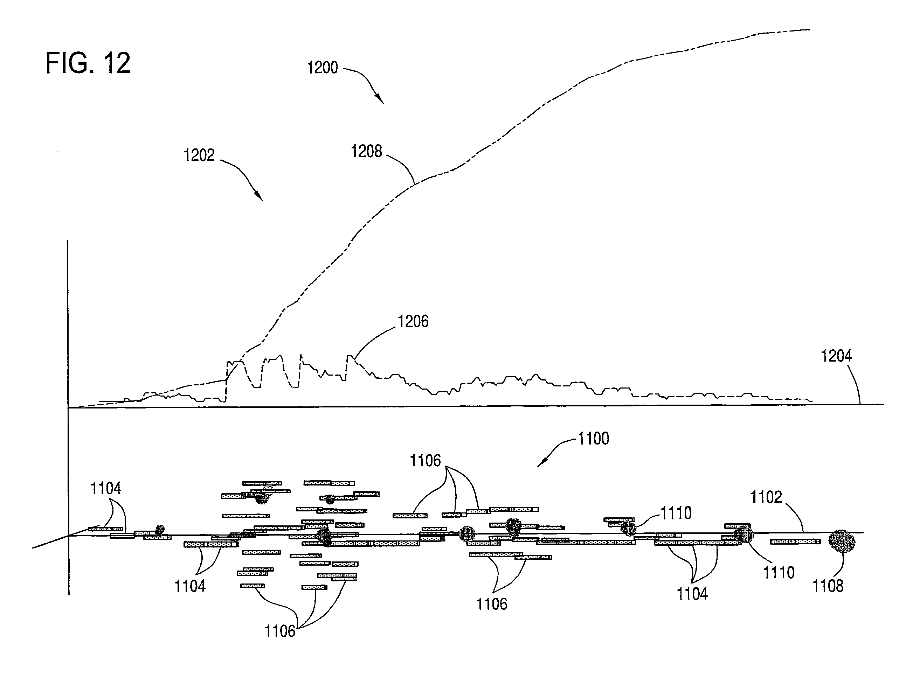

Similar to the data-driven case, in the schedule-driven case, the simulator **504** may track a number of variables such as on an instantaneous and/or cumulative basis, and may communicate one or more of these tracked variables to the layout engine **502** to reflect in a layout that also includes the network diagram. One example of a suitable layout after the simulator has simulated execution of the plan model for the schedule-driven case is shown in FIG. 12. As shown, for example, the layout **1200** includes a network diagram **1100** similar to that shown in FIG. 11, but additionally includes a line chart **1202.** The line chart may include a central time-directed axis **1204** that may be coincident or spaced from the axis **1102** of the network diagram. Along the axis, the line chart also includes one or more traces that express respective tracked variables. As shown, for example, the line chart may include one trace **1206** that expresses instantaneous resource usage, and/or another trace **1208** that expresses cumulative resource usage.

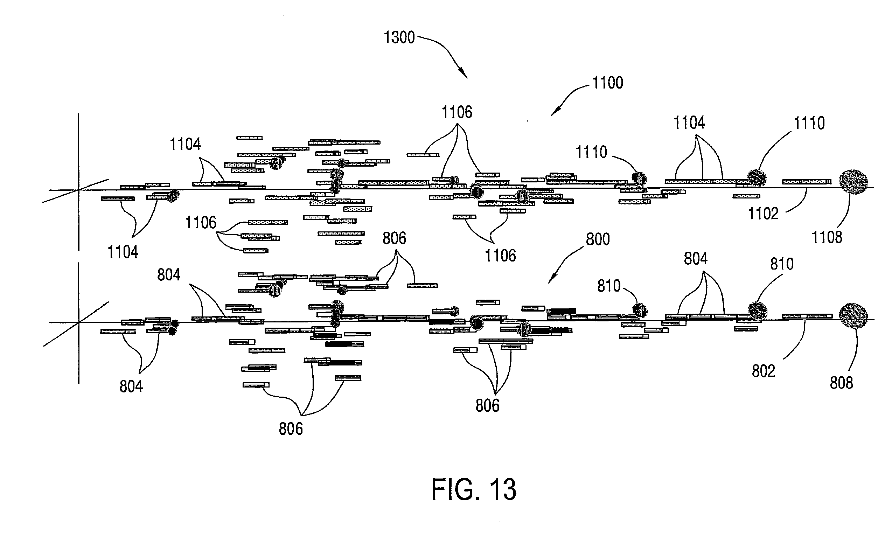

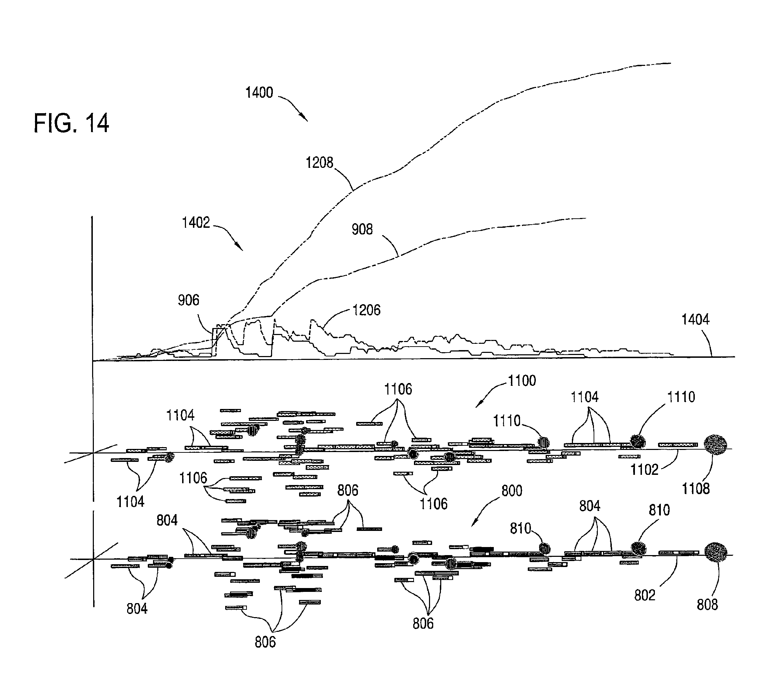

In other examples, the plan executor **500** may be configured to simulate execution of the plan model in both the data-driven and schedule-driven cases, and generate a respective dynamic layout representing the state of the plan during its execution. FIG. 13 illustrates an example layout **1300** including one example of a suitable network diagram after the simulator **504** has simulated execution of the plan model in both the data-driven case and schedule-driven case. This layout may include the data-driven network diagram **800,** as well as the schedule-driven network diagram **1100,** although the perspective of the respective diagrams may differ. FIG. 14 illustrates an example layout **1400** that includes layout **900** for the data-driven case, and layout **1200** for the schedule-driven case. This layout includes network diagrams **800, 1100,** but additionally includes a line chart **1402** including a central time-directed axis 1404 with traces **906, 908** and **1206, 1208** for instantaneous and cumulative resource usage for the data-driven and schedule-driven cases.

According to example implementations of the present disclosure, the process-planning system **100** and its subsystems including the process-construction system **102,** total-ordering system **104,** schedule modeler **106,** plan modeler **108** and plan executor **110** may be implemented by various means. Similarly, the examples of a total-ordering system **400** and plan executor **500,** including each of their respective elements, may be implemented by various means according to example implementations. Means for implementing the systems, subsystems and their respective elements may include hardware, alone or under direction of one or more computer program code instructions, program instructions or executable computer-readable program code instructions from a computer-readable storage medium.

In one example, one or more apparatuses may be provided that are configured to function as or otherwise implement the systems, subsystems and respective elements shown and described herein. In examples involving more than one apparatus, the respective apparatuses may be connected to or otherwise in communication with one another in a number of different manners, such as directly or indirectly via a wireline or wireless network or the like.

Generally, an apparatus of exemplary implementations of the present disclosure may comprise, include or be embodied in one or more fixed or portable electronic devices. Examples of suitable electronic devices include a smartphone, tablet computer, laptop computer, desktop computer, workstation computer, server computer or the like. The apparatus may include one or more of each of a number of components such as, for example, a processor (e.g., processor unit) connected to a memory (e.g., storage device).

The processor is generally any piece of hardware that is capable of processing information such as, for example, data, computer-readable program code, instructions or the like (generally "computer programs," e.g., software, firmware, etc.), and/or other suitable electronic information. More particularly, for example, the processor may be configured to execute computer programs, which may be stored onboard the processor or otherwise stored in the memory (of the same or another apparatus). The processor may be a number of processors, a multi-processor core or some other type of processor, depending on the particular implementation. Further, the processor may be implemented using a number of heterogeneous processor systems in which a main processor is present with one or more secondary processors on a single chip. As another illustrative example, the processor may be a symmetric multi-processor system containing multiple processors of the same type. In yet another example, the processor may be embodied as or otherwise include one or more application-specific integrated circuits (ASICs), field-programmable gate arrays (FPGAs) or the like. Thus, although the processor may be capable of executing a computer program to perform one or more functions, the processor of various examples may be capable of performing one or more functions without the aid of a computer program.

The memory is generally any piece of hardware that is capable of storing information such as, for example, data, computer programs and/or other suitable information either on a temporary basis and/or a permanent basis. The memory may include volatile and/or non-volatile memory, and may be fixed or removable. Examples of suitable memory include random access memory (RAM), read-only memory (ROM), a hard drive, a flash memory, a thumb drive, a removable computer diskette, an optical disk, a magnetic tape or some combination of the above. Optical disks may include compact disk - read only memory (CD-ROM), compact disk - read/write (CD-R/W), DVD or the like. In various instances, the memory may be referred to as a computer-readable storage medium which, as a non-transitory device capable of storing information, may be distinguishable from computer-readable transmission media such as electronic transitory signals capable of carrying information from one location to another. Computer-readable medium as described herein may generally refer to a computer-readable storage medium or computer-readable transmission medium.

In addition to the memory, the processor may also be connected to one or more interfaces for displaying, transmitting and/or receiving information. The interfaces may include a communications interface (e.g., communications unit) and/or one or more user interfaces. The communications interface may be configured to transmit and/or receive information, such as to and/or from other apparatus(es), network(s) or the like. The communications interface may be configured to transmit and/or receive information by physical (wireline) and/or wireless communications links. Examples of suitable communication interfaces include a network interface controller (NIC), wireless NIC (WNIC) or the like.

The user interfaces may include a display and/or one or more user input interfaces (e.g., input/output unit). The display may be configured to present or otherwise display information to a user, suitable examples of which include a liquid crystal display (LCD), light-emitting diode display (LED), plasma display panel (PDP) or the like. The user input interfaces may be wireline or wireless, and may be configured to receive information from a user into the apparatus, such as for processing, storage and/or display. Suitable examples of user input interfaces include a microphone, image or video capture device, keyboard or keypad, joystick, touch-sensitive surface (separate from or integrated into a touchscreen), biometric sensor or the like. The user interfaces may further include one or more interfaces for communicating with peripherals such as printers, scanners or the like.

As indicated above, program code instructions may be stored in memory, and executed by a processor, to implement functions of the systems, subsystems and their respective elements described herein. As will be appreciated, any suitable program code instructions may be loaded onto a computer or other programmable apparatus from a computer-readable storage medium to produce a particular machine, such that the particular machine becomes a means for implementing the functions specified herein. These program code instructions may also be stored in a computer-readable storage medium that can direct a computer, a processor or other programmable apparatus to function in a particular manner to thereby generate a particular machine or particular article of manufacture. The instructions stored in the computer-readable storage medium may produce an article of manufacture, where the article of manufacture becomes a means for implementing functions described herein. The program code instructions may be retrieved from a computer-readable storage medium and loaded into a computer, processor or other programmable apparatus to configure the computer, processor or other programmable apparatus to execute operations to be performed on or by the computer, processor or other programmable apparatus.

Retrieval, loading and execution of the program code instructions may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions may produce a computer-implemented process such that the instructions executed by the computer, processor or other programmable apparatus provide operations for implementing functions described herein.

Execution of instructions by a processor, or storage of instructions in a computer-readable storage medium, supports combinations of operations for performing the specified functions. It will also be understood that one or more functions, and combinations of functions, may be implemented by special purpose hardware-based computer systems and/or processors which perform the specified functions, or combinations of special purpose hardware and program code instructions.

As explained above, the problem of large cost and schedule overruns during complex product development programs may be caused by the current management methodology used in large-scale product development. The overriding focus on cost and schedule control as the mechanism to manage outcome may contribute a primary root cause of the problem. Example implementations of the present disclosure may model the problem as the creation of a succinct set of internal and external products that dictate the necessary order of execution through their interdependent relationships. Example implementations may further enable the ability to determine the availability of sufficient information necessary to discriminate influence of each deliverable on execution performance. If the necessary information is available, total-ordering of large scale complex product development may be determinable.

Integration of large-scale complex product development is primarily a problem of order. If proper order is violated, the amount of rework necessary to reconcile inconsistencies resulting from the out-of-sequence behavior in large development programs may grow in factors of the original planned work statement. Control of cost and/or schedule may be lost because of the amount of out-of-sequence rework created overwhelms resource constraints. Current methods and practices used in managing large-scale product development amplify rather than attenuate the problem by ignoring constraints such as ordering or consistency if they conflict with predetermined schedule requirements. Example implementations of the present disclosure provide the opportunity to remedy this condition. Total-order flexibility exploited during production of physical and non-physical products (e.g., objects, information) may enable the avoidance of proceeding forward without satisfying conditions of consistency, which may significantly reduce the work statement by avoiding out-of-sequence rework. Example implementations and the use of scheduling to only reflect the state of completion of products, and not as a basis for order of execution, may correct the problem caused by the current methods used in managing product development.

Further the disclosure comprises the following clauses arrangements:

A computer-readable storage medium may be provided having computer-readable program code portions stored therein that, in response to execution by a processor, cause an apparatus to at least receive a plan model for a process including a plurality of tasks to produce respective internal products, generate a layout including a network diagram that expresses the plan model, the network diagram including along a time-directed axis, a plurality of task nodes that express respective tasks of the process, each task node being expressed as a first multi-dimensional shape having an outline with a dimension along the axis sized according to a task duration for a respective task, simulate execution of the plan model, including the apparatus being caused to track actual task duration of each task during the simulation, and dynamically update the network diagram to reflect the actual task duration, wherein in the updated network diagram, each task node further includes a fill in the same first multi-dimensional shape as the respective outline but with a dimension along the axis sized according to the actual task duration of the respective task.

The task node may be expressed as a rectangular cuboid having an outline with a length along the axis sized according to the task duration for the respective task. Each task node may further include a fill in the same rectangular cuboid shape as the respective outline but with a length along the axis sized according to the actual task duration of the respective task, the length of the fill originating coincident with the length of the outline.

The network diagram may further include one or more buffer nodes that express respective buffers for respective one or more chains in which the tasks are arranged, each buffer node being expressed as a second multi-dimensional shape having an outline with a dimension along the axis sized according to a size of a respective buffer, wherein the apparatus may be further caused to track buffer consumption of each buffer during the simulation, the network diagram being dynamically updated to reflect the buffer consumption, and wherein in the updated network diagram, each buffer node may further include a fill in the same second multi-dimensional shape as the respective outline but with a dimension along the axis sized according to the buffer consumption of the respective buffer.

Each buffer node may be expressed as a sphere having an outline with a diameter along the axis sized according to the size of the respective buffer, and each buffer node may further include a fill in the same spherical shape as the respective outline but with a diameter along the axis sized according to the buffer consumption of the respective buffer, the center of the fill originating coincident with the center of the outline.

The apparatus may be caused to simulate execution of the plan model in a data-driven configuration in which for at least some of the tasks that utilize or require one or more inputs, each task requires availability of all of its inputs before being initiated.

The apparatus may be caused to simulate execution of the plan model in a schedule-driven configuration in which for at least some of the tasks that utilize or require one or more inputs, each task is initiable in accordance with a schedule even if before all of its inputs are available.

The fill may include a first fill that expresses the actual task duration of a task in an instance in which the task is initiated after all of its inputs are available, and the fill may includes a second fill that expresses the actual task duration of a task executed out of sequence before all of its inputs are available, and a third fill that expresses the actual task duration of the task reworked after all of its inputs become available, in an instance in which the task is initiated before all of its inputs are available.

Many modifications and other implementations of the disclosure set forth herein will come to mind to one skilled in the art to which this disclosure pertains having the benefit of the teachings presented in the foregoing descriptions and the associated drawings. Therefore, it is to be understood that the disclosure is not to be limited to the specific example implementations provided herein and that modifications and other implementations are intended to be included within the scope of the appended claims. Moreover, although the foregoing descriptions and the associated drawings describe example implementations in the context of certain example combinations of elements and/or functions, it should be appreciated that different combinations of elements and/or functions may be provided by alternative implementations without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A plan executor (110) comprising:
a layout engine (502) configured to receive a plan model for a process including a plurality of tasks to produce respective internal products, and generate a layout including a network diagram (200) that expresses the plan model, the network diagram (200) including along a time-directed axis (202), a plurality of task nodes (206, 208)that express respective tasks of the process, each task node being expressed as a first multi-dimensional shape having an outline with a dimension along the axis (802) sized according to a task duration for a respective task; and
a simulator (504) coupled to the layout engine (502) and configured to simulate execution of the plan model, the simulator (504) being configured to track and communicate to the layout engine (502), actual task duration of each task during the simulation, the layout engine (502) being configured to dynamically update the network diagram (200) to reflect the actual task duration, wherein in the updated network diagram (200), each task node further includes a fill (816) in the same first multi-dimensional shape as the respective outline but with a dimension along the axis (802) sized according to the actual task duration of the respective task.

2. The plan executor (110) of Claim 1, wherein each task node (1104, 1106) is expressed as a rectangular cuboid having an outline with a length along the axis (802) sized according to the task duration for the respective task, and
wherein each task node (1104, 1106) further includes a fill (816) in the same rectangular cuboid shape as the respective outline but with a length along the axis (802) sized according to the actual task duration of the respective task, the length of the fill (816) originating coincident with the length of the outline.

3. The plan executor (110) of Claim 1, wherein the network diagram (200) further includes one or more buffer nodes (608, 610) that express respective buffers for respective one or more chains in which the tasks are arranged, each buffer node being expressed as a second multi-dimensional shape having an outline with a dimension along the axis (802) sized according to a size of a respective buffer,
wherein the simulator (504) is further configured to track and communicate to the layout engine (502), buffer consumption of each buffer during the simulation, the layout engine (502) being configured to dynamically update the network diagram (200) to reflect the buffer consumption, and
wherein in the updated network diagram (200), each buffer node further includes a fill (816) in the same second multi-dimensional shape as the respective outline but with a dimension along the axis (802) sized according to the buffer consumption of the respective buffer.

4. The plan executor (110) of Claim 3, wherein each buffer node is expressed as a sphere having an outline with a diameter along the axis (802) sized according to the size of the respective buffer, and
wherein each buffer node further includes a fill (816) in the same spherical shape as the respective outline but with a diameter along the axis (802) sized according to the buffer consumption of the respective buffer, the center of the fill (816) originating coincident with the center of the outline.

5. The plan executor (110) of Claim 1, wherein the simulator (504) is configured to simulate execution of the plan model in a data-driven configuration in which for at least some of the tasks that utilize or require one or more inputs, each task requires availability of all of its inputs before being initiated.

6. The plan executor (110) of Claim 1, wherein the simulator (504) is configured to simulate execution of the plan model in a schedule-driven configuration in which for at least some of the tasks that utilize or require one or more inputs, each task is initiable in accordance with a schedule even if before all of its inputs are available.

7. The plan executor (110) of Claim 6, wherein the fill (816) includes a first fill (816) that expresses the actual task duration of a task in an instance in which the task is initiated after all of its inputs are available, and
wherein the fill (816) includes a second fill (1116a) that expresses the actual task duration of a task executed out of sequence before all of its inputs are available, and a third fill (1116b) that expresses the actual task duration of the task reworked after all of its inputs become available, in an instance in which the task is initiated before all of its inputs are available.

8. A method comprising:
receiving a plan model for a process including a plurality of tasks to produce respective internal products;
generating a layout including a network diagram (200) that expresses the plan model, the network diagram (200) including along a time-directed axis (202), a plurality of task nodes (206, 208) that express respective tasks of the process, each task node (1104, 1106) being expressed as a first multi-dimensional shape having an outline with a dimension along the axis sized according to a task duration for a respective task;
simulating execution of the plan model, including tracking actual task duration of each task during the simulation; and
dynamically updating the network diagram (200) to reflect the actual task duration, wherein in the updated network diagram (200), each task node (1104, 1106) further includes a fill (816) in the same first multi-dimensional shape as the respective outline but with a dimension along the axis sized according to the actual task duration of the respective task.

9. The method of Claim 8, wherein each task node (1104, 1106) is expressed as a rectangular cuboid having an outline with a length along the axis sized according to the task duration for the respective task, and
wherein each task node (1104, 1106) further includes a fill (816) in the same rectangular cuboid shape as the respective outline but with a length along the axis sized according to the actual task duration of the respective task, the length of the fill (816) originating coincident with the length of the outline.

10. The method of Claim 8, wherein the network diagram (200) further includes one or more buffer nodes (608, 610) that express respective buffers for respective one or more chains in which the tasks are arranged, each buffer node being expressed as a second multi-dimensional shape having an outline with a dimension along the axis sized according to a size of a respective buffer,
wherein tracking actual task duration further includes tracking buffer consumption of each buffer during the simulation, the network diagram (200) being dynamically updated to reflect the buffer consumption, and
wherein in the updated network diagram (200), each buffer node further includes a fill (816) in the same second multi-dimensional shape as the respective outline but with a dimension along the axis sized according to the buffer consumption of the respective buffer.

11. The method of Claim 10, wherein each buffer node is expressed as a sphere having an outline with a diameter along the axis sized according to the size of the respective buffer, and
wherein each buffer node further includes a fill (816) in the same spherical shape as the respective outline but with a diameter along the axis sized according to the buffer consumption of the respective buffer, the center of the fill (816) originating coincident with the center of the outline.

12. The method of Claim 8, wherein simulating execution of the plan model includes simulating execution of the plan model in a data-driven configuration in which for at least some of the tasks that utilize or require one or more inputs, each task requires availability of all of its inputs before being initiated.

13. The method of Claim 8, wherein simulating execution of the plan model includes simulating execution of the plan model in a schedule-driven configuration in which for at least some of the tasks that utilize or require one or more inputs, each task is initiable in accordance with a schedule even if before all of its inputs are available.

14. The method of Claim 13, wherein the fill (816) includes a first fill (816) that expresses the actual task duration of a task in an instance in which the task is initiated after all of its inputs are available, and
wherein the fill (816) includes a second fill (1116a) that expresses the actual task duration of a task executed out of sequence before all of its inputs are available, and a third fill (1116b) that expresses the actual task duration of the task reworked after all of its inputs become available, in an instance in which the task is initiated before all of its inputs are available.

15. A computer-readable storage medium having computer-readable program code portions stored therein that, in response to execution by a processor, cause an apparatus to at least:
receive a plan model for a process including a plurality of tasks to produce respective internal products;
generate a layout including a network diagram (200) that expresses the plan model, the network diagram (200) including along a time-directed axis (202), a plurality of task nodes (604, 606) that express respective tasks of the process, each task node (604) being expressed as a first multi-dimensional shape having an outline with a dimension along the axis sized according to a task duration for a respective task;
simulate execution of the plan model, including the apparatus being caused to track actual task duration of each task during the simulation; and
dynamically update the network diagram (200) to reflect the actual task duration, wherein in the updated network diagram (200), each task node (1104, 1106) further includes a fill (816) in the same first multi-dimensional shape as the respective outline but with a dimension along the axis sized according to the actual task duration of the respective task.
